# FASCICULE DE BREVET EUROPEEN

(11) **EP 4 436 351 B1**
(45) Date de publication et mention de la délivrance du brevet: **30.07.2025**
(21) Numéro de dépôt: 22822360.8
(22) Date de dépôt: 24.11.2022
(51) Int. Cl.: A01B 39/18, A01B 39/22, A01B 63/02, A01B 39/24

(54) **BLOC OUTIL POUR MACHINE AGRICOLE, MACHINE AGRICOLE ÉQUIPÉE D'UN TEL BLOC OUTIL**
WERKZEUGBLOCK FÜR EINE LANDWIRTSCHAFTLICHE MASCHINE, LANDWIRTSCHAFTLICHE MASCHINE MIT EINEM SOLCHEN WERKZEUGBLOCK
TOOL BLOCK FOR AN AGRICULTURAL MACHINE, AGRICULTURAL MACHINE PROVIDED WITH A TOOL BLOCK OF THIS KIND

(30) Priorité: 25.11.2021 FR 2112498
(43) Date de publication de la demande: 02.10.2024
(73) Titulaire: NAÏO-Technologies, 31750 Escalquens (FR)
(72) Inventeur: MATHIEU, Bruno, 31320 CASTANET (FR); FRAISIER VANNIER, Clément, 31120 LACROIX-FALGARDE (FR); MOINDRAULT, Denis, 31290 MAUREMONT (FR); SÉVERAC, Gaëtan, 31200 TOULOUSE (FR); BARTHES, Aymeric, 31230 FLOURENS (FR)
(74) Mandataire: Ipside
(86) Numéro de dépôt international: PCT/EP2022/083148
(87) Numéro de publication internationale: WO 2023/094532

(56) Documents cités:
- EP-A1- 3 366 097
- EP-A1- 3 772 265
- KR-Y1- 200 471 600
- US-A- 5 394 945
- US-A1- 2021 022 282
- US-A1- 2021 243 940
- US-B2- 10 485 154

## Description

La présente demande concerne le domaine des machines agricoles utilisées dans les champs pour la réalisation et/ou l'entretien (désherbage mécanique par exemple) et/ou la récolte des cultures maraîchères.

Plus particulièrement, l'invention concerne le domaine des robots enjambeurs pour cultures maraichères industrielles basses (légumes en général) en planches. On entend par « planche » une série de plusieurs rangs de cultures parallèles, généralement dédiés à une seule culture en particulier. L'expression « robot enjambeur » signifie que les roues du robot se retrouvent de part et d'autres de la planche et que le corps du robot surplombe la planche. Un robot enjambeur pour culture en planches est configuré pour surplomber une planche (ses roues sont situées de part et d'autre de la planche) ou éventuellement plusieurs planches, et pour travailler entre les rangs de la planche qu'il surplombe ou sur les rangs eux-mêmes, par exemple entre les plants de chaque rang de la planche.

Un tel robot comprend usuellement une partie dédiée à la traction ou la propulsion du robot, une partie dédiée à la direction du robot et un bloc outil généralement positionné en partie centrale du robot, le bloc outil étant porté par un essieu fixe auquel est associé le système de guidage du robot (dont un GPS) afin que le positionnement du bloc outil par rapport aux cultures soit le plus précis possible.

Les documents US 2021/243940 A1, EP 3 772 265 A1, US 5 394 945 A, US 2021/022282 A1, US 10 485 154 B2, EP 3 366 097 A1 et KR 200 471 600 Y1 décrivent chacun un bloc outil qui ne permet pas de positionner individuellement chaque porte-outil sur un même rail-support par l'intermédiaire d'un moyen motorisé.

Dans le cas d'un robot pour cultures industrielles en planches, le bloc outil comporte une pluralité d'outils répartis selon la direction transversale du robot, laquelle direction transversale est orthogonale à la direction de déplacement du robot. Les outils sont répartis transversalement de façon à ce que chaque outil soit par exemple positionné entre deux rangs de la planche. A titre d'exemple, pour une planche de dix rangs, le bloc outil peut être équipé de onze socs ou couteaux de désherbage destinés à arracher les végétaux indésirables qui poussent entre les rangs. L'écartement entre les couteaux doit être minutieusement réglé pour que les couteaux n'abîment pas les plants cultivés dans les rangs.

Le désherbage des cultures maraichères en planches est en général un service que les exploitants agricoles achètent à une entreprise sous-traitante qui possède le robot approprié.

Or, les cultures en planches n'ont pas toutes les mêmes dimensions. Selon la plante cultivée ou pour d'autres raisons, le nombre de rangs par planche et surtout l'espace entre les rangs varient d'une culture à une autre, voire d'un champ à un autre.

Entre deux interventions du robot, la configuration du bloc outil, en particulier le nombre et le positionnement des outils, doit donc être redéfinie et réglée en fonction du prochain champ à traiter, ce qui entraîne une immobilisation du robot qui nuit à sa rentabilité pour l'entreprise sous-traitante qui exploite le robot. De surcroît, à ce jour, le réglage du bloc outil (en particulier, le positionnement des outils) s'effectue de façon manuelle et est donc particulièrement long et coûteux en temps d'immobilisation et en main d'œuvre. En outre, des erreurs de positionnement peuvent survenir, avec le risque d'endommager une culture.

L'invention vise à pallier au moins l'un des inconvénients susmentionnés en fournissant un bloc outil dont le réglage s'effectue aisément, rapidement et sans erreur, afin d'améliorer la rentabilité des machines agricoles équipées d'un tel bloc outil.

Pour ce faire, l'invention propose un bloc outil pour machine agricole (cette dernière pouvant être robotisée ou non), le bloc outil présentant une direction axiale destinée à coïncider avec une direction de déplacement de la machine agricole, et une direction transversale selon laquelle est définie une largeur du bloc outil, cette direction transversale du bloc outil étant destinée à coïncider avec une direction transversale de la machine agricole orthogonale à la direction axiale de déplacement de la machine agricole, le bloc outil comprenant :
- une pluralité d'outils,
- pour chaque outil, un porte-outil sur lequel l'outil est monté,
- un rail-support s'étendant selon la direction transversale, sur lequel les outils peuvent être montés par l'intermédiaire de leur porte-outil respectif, lequel porte-outil comprend des moyens d'accouplement au rail-support autorisant un déplacement du porte-outil relativement au rail-support selon la direction transversale (qui est aussi la direction longitudinale du rail-support).

Le bloc outil selon l'invention est caractérisé en ce qu'il comprend :
- un système central de commande à microprocesseur(s),
- une interface homme-machine reliée au système central de commande et configurée pour permettre à un utilisateur de sélectionner une configuration d'utilisation définissant des outils à utiliser parmi la pluralité d'outils du bloc outil, ainsi qu'une position cible sur le rail-support pour chacun des outils à utiliser,
- le bloc outil comprend des moyens d'entraînement motorisés configurés pour déplacer individuellement chaque porte-outil selon la direction transversale sur le rail-support, les moyens d'entraînement motorisés étant contrôlés, directement ou indirectement, par le système central de commande,
- des moyens de détermination de positionnement pour déterminer la position de chaque porte-outil relativement au rail-support selon la direction transversale.

Selon une caractéristique possible de l'invention, le rail-support comporte :
- une première extrémité, dite extrémité de chargement, et un premier tronçon, dit tronçon de chargement, par lesquels la pluralité de porte-outils peut être chargée sur le rail-support, ainsi qu'une extrémité opposée dite extrémité de parking,
- un tronçon central de travail, sur lequel les porte-outils des outils à utiliser peuvent être entraînés et positionnés selon la configuration d'utilisation sélectionnée, à l'aide des moyens d'entraînement motorisés et des moyens de détermination de positionnement,
- un tronçon latéral de parking s'étendant à partir de l'extrémité de parking du rail-support, sur lequel des outils non utilisés parmi la pluralité d'outils peuvent être stockés, c'est-à-dire mis de côté et neutralisés dans l'attente d'une utilisation future éventuelle.

De préférence, le rail-support comprend deux tronçons latéraux de parking (un de chaque côté du tronçon central de travail), c'est-à-dire un tronçon partant de l'extrémité de parking et un tronçon partant de l'extrémité de chargement du rail-support. Dans ce cas, toute caractéristique décrite pour un tronçon latéral de parking peut s'appliquer, sauf précision contraire, aux deux tronçons latéraux de parking.

Divers modes de réalisation sont possibles pour les moyens d'entrainement motorisés. Selon un premier mode de réalisation possible, les moyens d'entraînement motorisés comprennent une chaîne fixe qui s'étend selon la direction transversale et est intégrée au rail-support, ainsi que, pour chaque porte-outil, un pignon adapté pour être engrené sur la chaine fixe du rail-support aux fins de déplacement du porte-outil le long du rail-support.

Dans une première version possible de ce mode de réalisation, dans laquelle le porte-outil est qualifié d'actif, les moyens d'entraînement motorisés comprennent de plus, pour chaque porte-outil, un moteur configuré pour entraîner en rotation un arbre moteur sur lequel le pignon du porte-outil est fixé.

Comme précédemment indiqué, les moyens d'entraînement motorisés, et en particulier le moteur de chaque porte-outil, peuvent être directement contrôlés par le système central de commande. En variante, les moyens d'entraînement motorisés, et en particulier le moteur de chaque porte-outil, peuvent être indirectement contrôlés par le système central de commande, comme suit :
- le bloc outil comprend, pour chaque outil, une carte individuelle de commande à microprocesseur(s), logée dans le porte-outil sur lequel l'outil est monté et dans laquelle est mémorisé un identifiant de l'outil, ladite carte individuelle de commande étant reliée au système central de commande du bloc outil, par exemple par une liaison filaire ;
- les moyens de détermination de positionnement comprennent un module de calcul intégré dans la carte individuelle de commande de chaque outil.

Par ailleurs, selon une caractéristique possible, les moyens de détermination de positionnement comprennent un ou plusieurs capteurs situés sur le rail-support et/ou sur chaque porte-outil.

Par exemple, les moyens de détermination de positionnement comprennent, pour chaque porte-outil, un capteur SINCOS configuré pour transmettre à la carte individuelle de commande de l'outil (si le porte-outil en est équipé) ou au système central de commande des données de mesure représentatives d'un angle que forme un axe repère du pignon avec un axe de référence fixe orthogonal à l'arbre moteur, la carte individuelle de commande de l'outil et/ou le système central de commande étant configuré pour calculer un nombre de tours complets et des fractions de tour effectués par l'arbre moteur depuis une position d'engrenage ou depuis une position précédemment mémorisée et pour en déduire une position courante du porte-outil relativement au rail support.

Selon une caractéristique possible de l'invention, l'extrémité de chargement du rail-support est chanfreinée afin de faciliter le chargement des porte-outils sur le rail-support.

Selon une caractéristique possible de l'invention, les moyens d'accouplement au rail-support de chaque porte-outils comprennent une potence présentant une ouverture d'accouplement ayant une section complémentaire de la section nominale du rail-support, la lumière d'accouplement étant équipée de galets (ou roulements) pour permettre le déplacement de la potence le long du rail-support. De préférence, ces galets comprennent un ou plusieurs galets fixes et un galet réglable dont la position radiale par rapport au rail est ajustable et qui est soumis à une force de rappel centripète par rapport au rail. Ce galet réglable (il peut éventuellement y en avoir plusieurs) permet d'une part de compenser d'éventuelles variations de section du rail-support dues à un défaut de conception ou à l'usure, et d'autre part d'appliquer un effort de pincement du porte-outil sur le rail-support garantissant un maintien rigide du porte-outil sur le rail-support durant le travail.

Selon une caractéristique possible de l'invention dans le cas où les moyens d'entraînement comprennent une chaîne fixe sur le rail-support, laquelle chaîne fixe présente une première extrémité dite extrémité d'engrenage du côté de l'extrémité de chargement du rail-support et une extrémité opposée dite extrémité de parking, les moyens de détermination de positionnement comprennent, d'une part un détecteur de proximité (par exemple un détecteur inductif) sur chaque porte-outil et d'autre part, à l'extrémité d'engrenage de la chaîne, un élément sensible apte à être détecté par le détecteur de proximité de chaque porte-outil. Ces détecteurs inductifs de proximité et l'élément sensible associé permettent donc de détecter le passage d'un porte-outil sur l'extrémité d'engrenage de la chaîne, c'est-à-dire l'engrenage du porte-outil sur la chaîne si celui-ci était précédemment en dehors de la chaîne ou le désengrenage du porte-outil si celui-ci était précédemment sur la chaîne.

L'élément sensible constitue avantageusement une référence pour tout calcul de positionnement. Le module de calcul de la carte individuelle de commande du porte-outil ou celui du système central de commande est alors configuré pour calculer le nombre de tours (complets ou non) effectués par l'arbre moteur du porte-outil depuis la détection de l'élément sensible, c'est-à-dire depuis l'engrenage du pignon sur la chaîne fixe, à partir des données de mesure fournies par le capteur SINCOS ; le module de calcul est configuré pour en déduire la position courante du porte-outil.

La carte individuelle de commande de chaque porte-outil comprend une mémoire non volatile, dans laquelle le nombre de tour et l'angle courant sont stockés en permanence. Ainsi, en cas de perte d'alimentation, il est possible de retrouver la position absolue du porte-outil sur le rail-support.

Selon une caractéristique possible de l'invention, chaque porte-outil comporte un capteur ou interrupteur de fin de course sur une face latérale amont du porte-outil, ladite face latérale amont étant orientée vers l'extrémité de parking du rail-support.

Selon une caractéristique possible de l'invention, chaque porte-outil comporte des moyens de réglage en hauteur de la position de l'outil relativement au porte-outil (et donc relativement au rail-support). Ce réglage est de préférence manuel. On pourrait en variante prévoir de moyens de réglage automatique motorisés, au détriment toutefois du poids, de l'encombrement et du coût du porte-outil.

L'invention s'étend à un procédé de réglage d'un bloc outil de machine agricole caractérisé en ce qu'on utilise un bloc outil tel que précédemment défini et en ce que :
- une configuration d'utilisation est sélectionnée par un utilisateur via l'interface homme-machine, cette configuration d'utilisation définissant d'une part des outils (et donc des porte-outils) à utiliser parmi la pluralité d'outils du bloc outil, et d'autre part une position cible sur le rail support pour chaque outil à utiliser,
- le système central de commande contrôle les moyens d'entraînement motorisés pour déplacer individuellement chaque porte-outil à utiliser jusqu'à sa position cible.

Par exemple, si chaque porte-outil est équipé d'un moteur et d'une carte individuelle de commande, le système central de commande transmet à la carte individuelle de commande de chacun des outils à utiliser la position cible de l'outil en question, et la carte individuelle de commande contrôle le moteur en fonction de la position cible et d'une position actuelle du porte-outil déterminée à l'aide des moyens de détermination de positionnement.

La carte individuelle de commande détermine la position actuelle du porte-outil en fonction d'une position dernièrement mémorisée et d'un historique de déplacement recensant les tours complets et fractions de tour de l'arbre moteur depuis cette position dernièrement mémorisée, grâce aux données de mesure fournies par le capteur SINCOS,

La carte individuelle de commande contrôle le moteur du porte-outil de façon à déplacer le porte-outil jusqu'à la position cible, compte tenu de la position actuelle du porte-outil.

L'invention, selon un exemple de réalisation, sera bien comprise et ses avantages apparaitront mieux à la lecture de la description détaillée qui suit, donnée à titre indicatif et nullement limitatif, en référence aux dessins annexés dans lesquels :
[Fig. 1] la figure 1 est une vue en perspective schématique d'un mode de réalisation d'un bloc outil selon l'invention ;
[Fig. 2] la figure 2 est une vue de profil schématique d'un porte-outil (avec un outil) du bloc outil de la figure 1 ;

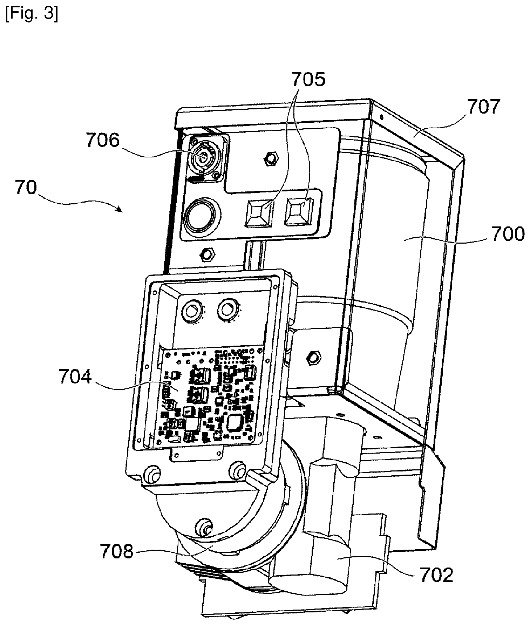

[Fig. 3] la figure 3 est une vue en perspective schématique d'un élément (en l'occurrence un bloc moteur) du porte-outil de la figure 3 ;
[Fig. 4] la figure 4 est une vue en perspective schématique d'un élément (en l'occurrence une potence) du porte-outil de la figure 3 ;

Les éléments identiques représentés sur les figures précitées sont identifiés par des références numériques identiques.

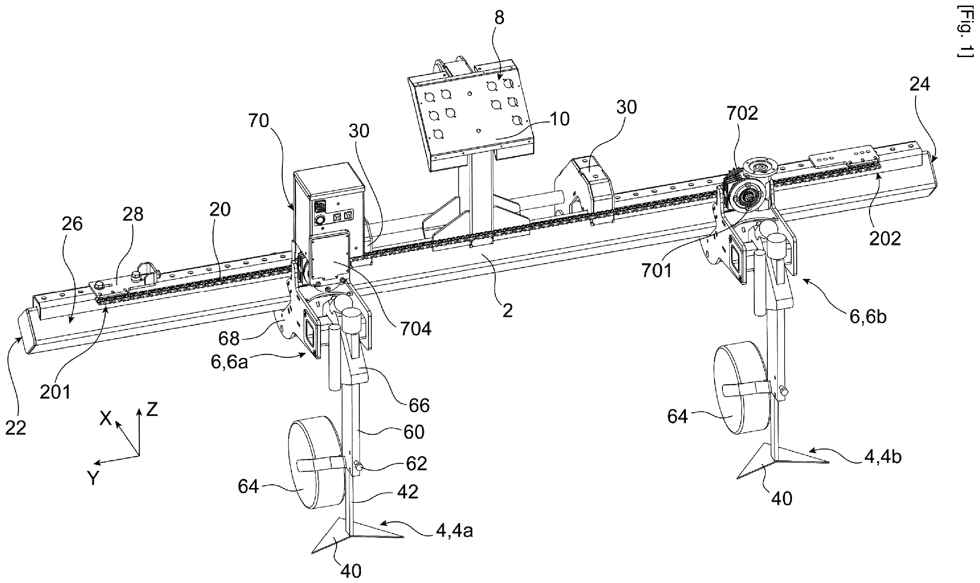

La figure 1 représente un bloc outil pour machine agricole, selon un premier mode de réalisation de l'invention. Ce bloc outil comprend un rail-support 2 s'étendant principalement selon une direction longitudinale Y qui coïncide avec une direction transversale de la machine agricole lorsque le bloc outil est installé sur une machine agricole. Le bloc outil comprend des éléments de fixation 30 pour sa fixation à un axe porteur de la machine agricole.

Le bloc outil comprend de plus une pluralité d'outils 4 portés chacun par un porte-outil 6. Par soucis de clarté, seuls deux outils 4a, 4b (et leur porte-outil respectif 6a, 6b) sont ici représentés. Chaque outil comprend un élément de travail, ici un soc 40 pour le désherbage entre les rangs d'une planche de cultures maraîchères basses. Le soc 40 est porté par une tige-support 42 à laquelle il est fixé.

Le porte-outil 6 comprend une barre tubulaire 60 verticale dans laquelle peut coulisser la tige-support 42 de l'outil. L'ensemble télescopique 60+42 formé par la barre tubulaire 60 du porte-outil et la tige-support 42 de l'outil permet de prérégler en hauteur la position de l'élément de travail de l'outil (c'est-à-dire du soc 40) en fonction, par exemple, du type d'outil concerné. En effet, selon sa fonction, l'élément de travail de l'outil doit se trouver à la surface de la terre ou à une distance donnée au-dessus de celle-ci, à hauteur des cultures, ou à une distance donnée en dessous de la surface de la terre. Le porte-outil illustré comprend de plus une roue de guidage 64 qui précède immédiatement le soc lorsque la machine agricole avance. La hauteur de la surface de la terre est donnée par la surface de roulement de la roue de guidage 64. Une fois le préréglage effectué, l'ensemble télescopique 60+42 est bloqué à l'aide d'une vis 62.

La roue de guidage 64, dont la hauteur est fixe par rapport à la barre tubulaire 60 permet d'ajuster en temps réel la hauteur de l'élément de travail 40 de l'outil en fonction du terrain rencontré. A cette fin, la barre tubulaire 60 qui porte le soc 40 et la roue de guidage 64 est montée coulissante dans un manchon 66 du porte-outil.

Les éléments précédemment décrits de l'outil 4 et du porte-outil 6 sont connus de l'homme du métier. L'un des avantages de l'invention est d'ailleurs de pouvoir utiliser dans le cadre de l'invention des outils et porte-outils existants, disponibles dans le commerce, sans avoir à les modifier.

Le porte-outil selon l'invention comporte de plus une potence 68 pour sa connexion au rail-support 2. La potence 68 présente, d'un premier côté, une lumière 680 pour sa fixation au manchon 66 par l'intermédiaire d'un axe carré 682 qui traverse aussi deux pattes latérales du manchon 66. La potence 68 présente, du côté opposé, un étrier 684 pour son montage sur le rail-support 2.

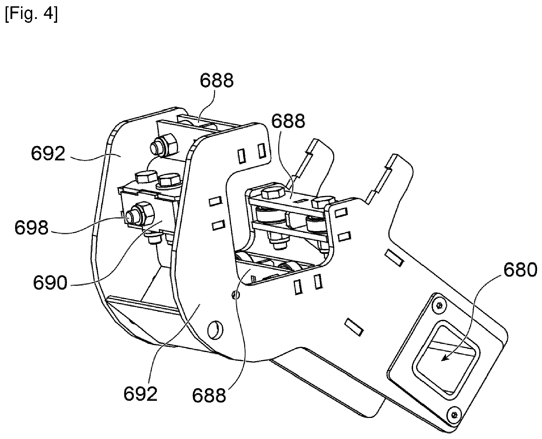

Comme illustré, le rail-support 2 peut présenter une section droite carrée, auquel cas l'étrier 684 forme une ouverture d'accouplement 686 de section carrée légèrement plus grande que la section du rail-support, par laquelle le porte-outil 6 peut être enfilé sur le rail-support 2. La potence 68 comprend de plus des galets facilitant le coulissement du porte-outil le long du rail-support. Dans l'exemple illustré, ces galets prennent la forme de quatre chariots à galets à aiguilles (voir figure 4), dont trois chariots fixes 688 et un chariot réglable 690. Chaque chariot est porté par une traverse reliant deux joues 692 de l'étrier. Les roulettes ou billes des quatre chariots sont destinées à rouler sur les quatre faces du rail-support 2, respectivement.

L'étrier 684, l'ouverture 686 et les quatre chariot 688, 690 forment des moyens d'accouplement du porte-outil 6 au rail-support 2 autorisant un déplacement du porte-outil relativement au rail-support selon la direction transversale (c'est-à-dire selon la direction longitudinale du rail-support).

Le rail-support 2 présente une première extrémité 22 dite extrémité de chargement, par laquelle les porte-outils (et leurs outils) peuvent être chargés sur le rail-support et une extrémité opposée 24, dite extrémité de parking.

Le rail-support 2 intègre une chaine fixe 20 qui s'étend selon la direction longitudinale du rail-support (direction transversale de la machine agricole équipée du bloc outil) sur la totalité de la longueur du rail à l'exception d'un tronçon de chargement 26 du côté de l'extrémité de chargement 22, qui permet de positionner correctement le porte-outil lors de son chargement, avant son accouplement à la chaine 20.

Un tendeur 28 est prévu pour pouvoir régler la tension de la chaîne.

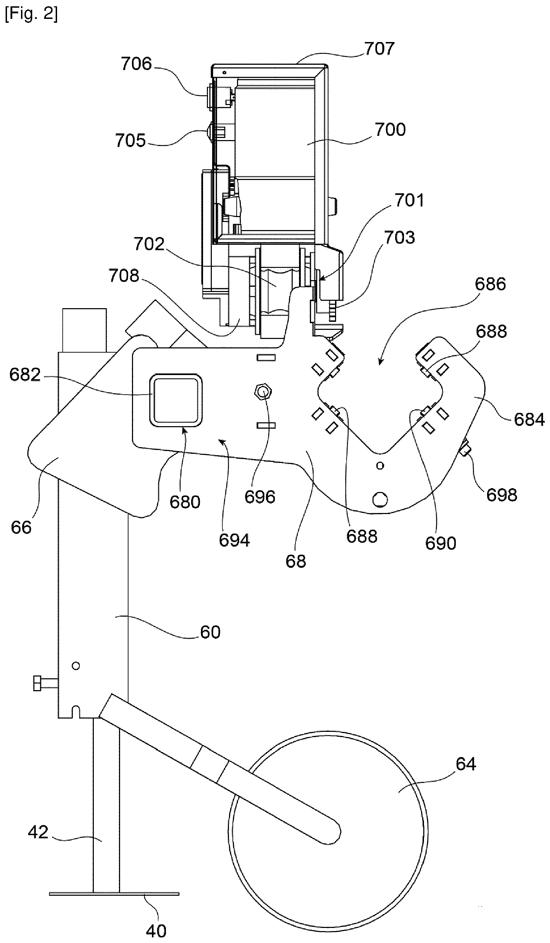

Chaque porte-outil comprend par ailleurs : un bloc moteur 70 comprenant un moteur 700, un arbre moteur 701, un réducteur 702, un pignon 703 (voir figure 2) ; une carte individuelle de commande 704 à microprocesseur(s) ; divers interrupteurs 705, dont un bouton de sélection du mode d'opération, un bouton marche vers la droite et un bouton marche vers la gauche permettent à un utilisateur de déplacer à volonté le porte-outil en cas de besoin, indépendamment du réglage automatique opéré par le système central de commande ; divers connecteurs 706 ; un capot 707, dont une partie est arrachée sur le porte-outil 6a de la figure 1. A noter que certains éléments (dont le capot, le moteur, la carte individuelle de commande, les interrupteurs) n'ont pas été représentés pour le bloc moteur du porte-outil 6b afin de mieux montrer le réducteur 702. A noter que les boutons et interrupteurs susmentionnés font partie de l'interface homme-machine revendiquée.

La chaine fixe 20 du rail-support et le bloc moteur 70 (en particulier le moteur 700 et le pignon 702) de chaque porte-outil forment des moyens d'entraînement motorisés configurés pour déplacer individuellement chaque porte-outil selon la direction transversale sur le rail-support, les moyens d'entraînement motorisés étant contrôlés, directement ou indirectement par un système central de commande 8 décrit ci-après.

Le bloc outil selon l'invention comprend de plus des moyens de détermination de positionnement pour déterminer la position de chaque porte-outil relativement au rail-support selon la direction transversale. Par exemple, chaque porte-outil comprend une entretoise magnétique, solidaire de l'arbre moteur 701 et un aimant capteur (non visible sur les figure), ces éléments formant un capteur SINCOS 708 permettant de calculer le nombre de tours complets et/ou les fractions de tour réalisés par le pignon 703 dans chacun des deux sens depuis l'extrémité d'engrenage 201 de la chaine, la carte individuelle de commande 704 du porte-outil ou le système central de commande 8 étant configuré pour en déduire une position courante du porte-outil relativement au rail-support.

Le bloc outil comprend de plus le système central de commande 8 susmentionné. Celui-ci comporte par exemple une carte à microprocesseur(s) (non visible sur les figures) intégrée dans un boîtier surmontant le rail-support, ainsi qu'une interface homme-machine, reliée au système central de commande.

Dans l'exemple illustré, le bloc outil comprend de plus une platine de connexion 10 avec des perçages recevant des connecteurs (non représentés) pour connecter les porte-outils mobiles à l'aide de câbles spiralés (alimentation électrique et cordon de communication).

Le système central de commande 8 est relié aux cartes individuelles de commande 704 de tous les porte-outil présents sur le rail-support, par une liaison filaire (non visible sur les schémas annexés) ou par tout moyen sans fil approprié.

L'interface homme-machine peut comprendre des éléments portés par une partie fixe du bloc-outil (comme le rail-support) et des éléments portés par les porte-outils mobiles. L'interface homme-machine peut comprendre un écran d'affichage (non représenté), éventuellement tactile. En tout état de cause, l'interface homme-machine comprend des moyens de saisie pour permettre à un utilisateur de saisir une configuration d'utilisation définissant des outils à utiliser parmi la pluralité d'outils du bloc outil ainsi qu'une position cible sur le rail-support pour chacun des outils à utiliser.

Pour définir une configuration d'utilisation, l'utilisateur saisit par exemple la largeur totale de la planche de cultures à travailler, le nombre de rangs que contient la planche, le type de travail à effectuer (selon qu'il s'agit d'un travail entre les rangs de cultures, comme du désherbage, ou d'un travail sur les rangs eux-mêmes, ou encore d'un travail « mixte » où l'outil intervient à la fois entre les rangs et entre les plants sur les rangs). Ces trois informations saisies permettent au système central de commande de calculer la distance entre les rangs, qui correspond aussi à la distance entre les lignes inter-rangs, le nombre d'outils à utiliser et la position que devraient avoir les outils sur le rail-support, chaque outil se voyant alors attribué une position cible.

Avant la première utilisation du bloc outil, un mode chargement peut être sélectionné via l'interface homme-machine, pour le chargement initial des porte-outils (avec leur outil). Une fois ce mode sélectionné, l'utilisateur doit installer une pluralité de porte-outil (avec leur outil) sur le rail-support.

Pour ce faire, pour chaque porte-outil à charger, on enfile l'extrémité de chargement 22 du rail-support dans l'ouverture 686 de la potence 68 du porte-outil puis on ajuste la position du porte-outil placé sur le tronçon de chargement 24 du rail-support. Si nécessaire, on règle notamment la position radiale du chariot réglable 690 à l'aide d'une vis de réglage 698 de façon à ce que ses galets plaquent bien contre la face du rail-support située en regard et exercent sur cette face une pression garantissant un bon maintien du porte-outil sur le rail-support sans empêcher son coulissement le long dudit rail-support.

Le cas échéant, on connecte le fil de liaison entre le système central de commande 8 et la carte individuelle de commande 704 du porte-outil. Cette connexion déclenche le transfert d'informations de la carte individuelle de commande vers le système central de commande, lesquelles informations comprennent au moins une référence d'identification de l'outil présent sur le porte-outil (cette référence permettant à la fois d'identifier individuellement l'outil et de savoir quelle est sa nature).

On pousse ensuite le porte-outil vers l'extrémité d'engrenage 201 de la chaine 20 de façon à engrener le pignon 703 sur la chaine fixe 20. Un capteur prévu sur le porte-outil détecte l'extrémité d'engrenage 201 de la chaine ou l'engrenage du pignon sur la chaîne, ce qui déclenche d'une part le démarrage du moteur 700 pour déplacer le porte-outil vers l'extrémité opposée du rail, et d'autre part le contrôle de la position du porte-outil par la carte individuelle de commande 704, par l'intermédiaire du capteur SINCOS que forment l'entretoise magnétique 708 et l'aimant capteur associé.

En mode chargement, le système central de commande 8 et/ou la carte individuelle de commande 704 sont configurés pour, dès que l'engrenage du piston sur la chaîne est détecté, activer le moteur 700 de façon à déplacer le porte-outil vers l'extrémité de parking 24 du rail. S'il s'agit du premier porte-outil chargé sur le rail-support, celui-ci est déplacé jusqu'à l'extrémité de parking 202 de la chaine 20 (extrémité opposée à l'extrémité d'engrenage 201). Si le porte-outil n'est pas le premier à être chargé, il est déplacé vers l'extrémité de parking 202 jusqu'à ce qu'il vienne en butée contre un porte-outil précédemment chargé ; à cette fin par exemple, une face latérale amont 694 de la potence 68 du porte-outil est munie d'un capteur ou interrupteur de fin de course 696 (voir Fig. 2), dont l'activation entraîne l'arrêt du moteur 700.

On charge ainsi une pluralité de porte-outil 6 sur le rail-support 2.

Lorsqu'une configuration d'utilisation est sélectionnée via l'interface homme-machine comme expliqué supra, le système central de commande 8 sélectionne les porte-outil à utiliser, calcule la position cible de chacun des porte-outil sélectionnés, transmet la position cible de chaque porte-outil sélectionné à la carte de commande 704 du porte-outil en question, et envoie successivement aux cartes individuelles des porte-outils sélectionnés l'ordre de commander le déplacement du porte-outil jusqu'à sa position cible. Le système central de commande transmet de plus aux cartes individuelles de chacun des porte-outils non utilisés (s'il y en a) l'ordre de commander le déplacement dudit porte-outil jusqu'à un emplacement de parking situé soit du côté de l'extrémité de parking 202, soit du côté de l'extrémité d'engrenage 201. Les porte-outils non utilisés pour la prestation à venir sont bien évidemment choisis parmi les porte-outils les plus proches des extrémités.

A noter que le réducteur 702 du bloc moteur, dans la mesure où il est non réversible, sert aussi de moyens de verrouillage du pignon permettant d'interdire tout déplacement du porte-outil relativement au rail-support lorsque le moteur n'est pas actionné, par exemple lorsque le porte-outil a atteint sa position cible et tant qu'aucune autre configuration d'utilisation n'est saisie.

La préparation du bloc outil pour une prestation donnée est ainsi effectuée de façon automatique, très rapide et sans risque d'erreur. Le temps d'immobilisation de la machine agricole en raison du réglage de son bloc outil est ainsi réduit de façon significative. De surcroît, non seulement le réglage de la position des outils est plus rapide, mais il est aussi plus précis, ce qui garantit l'obtention d'un travail de qualité.

Si la machine agricole est équipée d'un contrôle caméra pour compenser les dérives du porteur auquel est fixé le rail-support, l'invention permet aussi d'ajuster individuellement la position de chaque outil pour compenser ces dérives, le rail-support restant fixe dans la machine. Avec un bloc outil de l'art antérieur, cette compensation s'effectue en déplaçant latéralement le rail-support, ce qui déplace en bloc tous les outils, et il n'est pas possible d'ajuster individuellement la position de chaque outil.

A noter que dans le cas où un outil est endommagé ou en cas de panne du moteur d'un porte-outil, il n'est pas nécessaire de décharger le porte-outil (et son outil) concerné. On peut simplement retirer l'outil ou le bloc moteur du porte-outil et équiper le porte-outil d'un autre outil ou bloc moteur. Si le porte-outil défaillant est le premier porte-outil présent sur le rail-support en partant de l'extrémité de chargement 22, on peut toutefois préférer décharger complètement le porte-outil (et son outil) et le remplacer par un nouvel ensemble pendant que l'ensemble défectueux est réparé.

L'invention n'est pas limitée au mode de réalisation représenté sur les figures annexées. Par exemple, d'autres moyens d'entraînement motorisés peuvent être prévus en remplacement de la chaine fixe 20 et des pignon 703, de même que d'autres moyens de positionnement des porte-outil relativement au rail-support peuvent être prévus en remplacement des entretoises magnétiques 708 et aimants capteurs 709. Toujours à titre d'exemple, on pourrait envisager que le déplacement des porte-outils soit directement commandé par le système central de commande et que les porte-outil soient dépourvus de carte individuelle de commande.

Un rail-support présentant une zone de chargement 26 à chacune de ses extrémités est aussi conforme à l'invention mais n'est pas souhaitable car l'absence de chaine dans la zone de chargement fait que cette zone ne peut pas être utilisée en tant que zone de parking ou de travail. Pour avoir une même longueur de parking, il faudrait donc utiliser un rail plus grand, ce qui, bien sûr, n'est pas avantageux.

D'autres variantes sont possibles dès lors qu'elles restent dans le cadre de la revendication 1 annexée.

## Revendications

1. Bloc outil pour machine agricole présentant une direction axiale (X) destinée à coïncider avec une direction de déplacement de la machine agricole, et une direction transversale (Y) selon laquelle est définie une largeur du bloc outil, cette direction transversale du bloc outil étant destinée à coïncider avec une direction transversale de la machine agricole orthogonale à la direction axiale de déplacement, le bloc outil comprenant :
- une pluralité d'outils (4, 4a, 4b),
- pour chaque outil, un porte-outil (6, 6a, 6b) sur lequel l'outil est monté,
- un rail-support (2) s'étendant selon la direction transversale (Y), sur lequel les outils peuvent être montés par l'intermédiaire de leur porte-outil respectif, lequel porte-outil comprend des moyens (68) d'accouplement au rail-support autorisant un déplacement du porte-outil relativement au rail-support selon la direction transversale (Y), qui comprend :
- un système central de commande (8) à microprocesseur(s),
- une interface homme-machine reliée au système central de commande et configurée pour permettre à un utilisateur de saisir une configuration d'utilisation définissant des outils à utiliser parmi la pluralité d'outils du bloc outil, ainsi qu'une position cible sur le rail-support pour chacun des outils à utiliser,
- le bloc outil comprend des moyens d'entraînement motorisés (20, 70) configurés pour déplacer individuellement chaque porte-outil (6) selon la direction transversale (Y) sur le rail-support, les moyens d'entraînement motorisés étant contrôlés, directement ou indirectement, par le système central de commande (8),
- des moyens de détermination de positionnement (704, 708, 709) pour déterminer la position de chaque porte-outil relativement au rail-support selon la direction transversale.

2. Bloc outil selon la revendication 1, **caractérisé en ce que** le rail-support comprend
- une extrémité de chargement (22) et un tronçon de chargement (26) par lesquelles les porte-outil (6) peuvent être chargés sur le rail-support (2),
- un tronçon central de travail sur lequel les porte-outils des outils à utiliser peuvent être entraînés et positionnés selon la configuration d'utilisation sélectionnée, à l'aide des moyens d'entraînement motorisés et des moyens de détermination de positionnement,
- au moins un tronçon latéral de parking, sur lequel des outils non utilisés parmi la pluralité d'outils peuvent être stockés.

3. Bloc outil selon l'une des revendications 1 ou 2, **caractérisé en ce que** les moyens d'entraînement motorisés comprennent une chaîne fixe (20) qui s'étend selon la direction transversale (Y) et est intégré au rail-support (2), ainsi que, pour chaque porte-outil, un pignon (703) adapté pour être engrené sur la chaine fixe du rail-support aux fins de déplacement du porte-outil le long du rail-support.

4. Bloc outil selon la revendication 3, **caractérisé en ce que** :
- le bloc outil comprend, pour chaque outil (4), une carte individuelle de commande (704) à microprocesseur(s), logée dans le porte-outil (6) sur lequel l'outil est monté, et dans laquelle est mémorisé un identifiant de l'outil, ladite carte individuelle de commande (704) étant reliée au système central de commande (8) du bloc outil,
- les moyens de détermination de positionnement comprennent un module de calcul intégré dans la carte individuelle de commande (704) de chaque porte-outil et un ou plusieurs capteurs situés sur le rail-support et/ou sur chaque porte-outil.

5. Bloc outil selon l'une des revendications 3 ou 4, **caractérisé en ce que** les moyens d'entraînement motorisés comprennent, pour chaque porte-outil (6), un bloc moteur (70) intégrant un moteur (700) configuré pour entraîner en rotation un arbre moteur (701) sur lequel le pignon (703) du porte-outil est fixé.

6. Bloc outil selon l'une des revendications 3 à 5, **caractérisé en ce que** les moyens de détermination de positionnement comprennent, pour chaque porte-outil (6), un capteur SINCOS (708) configuré pour transmettre à la carte individuelle de commande (704) de l'outil ou au système central de commande (8) des données de mesure représentatives d'un angle que forme un axe repère du pignon avec un axe de référence fixe orthogonal à l'arbre moteur (701), la carte individuelle de commande (704) de l'outil ou le système central de commande (8) étant configuré pour calculer un nombre de tours complets et des fractions de tour effectués par l'arbre moteur depuis une position d'engrenage (201) ou depuis une position précédemment mémorisée et pour en déduire une position courante du porte-outil (6) relativement au rail-support (2).

7. Bloc outil selon l'une des revendications 1 à 6, **caractérisé en ce que** les moyens d'accouplement au rail-support de chaque porte-outil comprennent une potence (68) présentant une ouverture d'accouplement (686) ayant une section complémentaire d'une section nominale du rail-support, l'ouverture d'accouplement étant équipée de galets (688, 690) pour permettre le déplacement de la potence le long du rail-support.

8. Bloc outil selon la revendication 7, **caractérisé en ce que** les galets comprennent un galet réglable (690) dont la position radiale par rapport au rail est ajustable et qui est soumis à une force de rappel centripète.

9. Bloc outil selon la revendication 3, la chaîne fixe (20) présentant une première extrémité (201), dite extrémité d'engrenage, du côté de l'extrémité de chargement (22) du rail-support, **caractérisé en ce que** les moyens de détermination de positionnement comprennent, d'une part un détecteur inductif de proximité sur chaque porte-outil et d'autre part, à l'extrémité d'engrenage (201) de la chaîne, un élément sensible apte à être détecté par le détecteur de proximité de chaque porte-outil.

10. Bloc outil selon l'une des revendications 1 à 9, **caractérisé en ce que** chaque porte-outil (6) comporte un capteur ou interrupteur de fin de course (696) sur une face latérale amont (694) du porte-outil orientée vers une extrémité de parking (24) du rail-support.

11. Machine agricole équipée d'un bloc outil selon l'une des revendications 1 à 10.

## Patentansprüche

1. Werkzeugblock für landwirtschaftliche Maschinen mit axialer Richtung (X), die dazu bestimmt ist, mit einer Bewegungsrichtung der landwirtschaftlichen Maschine zusammenzufallen, und einer Querrichtung (Y), entlang der eine Breite des Werkzeugblocks definiert ist, wobei die Querrichtung des Werkzeugblocks dazu bestimmt ist, mit einer Querrichtung der landwirtschaftlichen Maschine zusammenzufallen, die orthogonal zur axialen Bewegungsrichtung verläuft, wobei der Werkzeugblock Folgendes umfasst:
- eine Vielzahl von Werkzeugen (4, 4a, 4b),
- für jedes Werkzeug einen Werkzeughalter (6, 6a, 6b), an dem das Werkzeug montiert ist,
- eine Trägerschiene (2), die sich in der Querrichtung (Y) erstreckt und auf der die Werkzeuge über ihren jeweiligen Werkzeughalter montiert werden können, wobei der Werkzeughalter Mittel (68) zur Kopplung an die Trägerschiene umfasst, die eine Bewegung des Werkzeughalters relativ zu der Trägerschiene in der Querrichtung (Y) ermöglichen, die Folgendes umfasst:
- ein zentrales Steuersystem (8) mit Mikroprozessor(en),
- eine Mensch-Maschine-Schnittstelle, die mit dem zentralen Steuersystem verbunden und so konfiguriert ist, dass ein Benutzer eine Verwendungskonfiguration eingeben kann, die die zu verwendenden Werkzeuge aus der Vielzahl von Werkzeugen des Werkzeugblocks sowie eine Zielposition auf der Trägerschiene für jedes der zu verwendenden Werkzeuge definiert,
- der Werkzeugblock motorisierte Antriebsmittel (20, 70) umfasst, die so eingerichtet sind, dass sie jeden Werkzeughalter (6) einzeln in Querrichtung (Y) auf der Trägerschiene bewegen, wobei die motorisierten Antriebsmittel direkt oder indirekt durch das zentrale Steuersystem (8) gesteuert werden,
- Positionsbestimmungsmittel (704, 708, 709) zum Bestimmen der Position jedes Werkzeughalters relativ zu der Trägerschiene in der Querrichtung.

2. Werkzeugblock nach Anspruch 1, **dadurch gekennzeichnet, dass** die Trägerschiene Folgendes umfasst:
- ein Ladeende (22) und eine Ladestrecke (26), durch die die Werkzeughalter (6) auf die Trägerschiene (2) geladen werden können,
- einen zentralen Arbeitsabschnitt, auf dem die Werkzeughalter der zu verwendenden Werkzeuge entsprechend der gewählten Verwendungskonfiguration mithilfe der motorisierten Antriebsmittel und der Positionsbestimmungsmittel angetrieben und positioniert werden können,
- mindestens einen seitlichen Parkabschnitt, auf dem nicht verwendete Werkzeuge aus der Vielzahl von Werkzeugen gelagert werden können.

3. Werkzeugblock nach einem der Ansprüche 1 oder 2, **dadurch gekennzeichnet, dass** die motorisierten Antriebsmittel eine feste Kette (20) umfassen, die sich in der Querrichtung (Y) erstreckt und in die Trägerschiene (2) integriert ist, sowie für jeden Werkzeughalter ein Ritzel (703), das dazu geeignet ist, mit der festen Kette der Trägerschiene in Eingriff zu gelangen, um den Werkzeughalter entlang der Trägerschiene zu bewegen.

4. Werkzeugblock nach Anspruch 3, **dadurch gekennzeichnet, dass**:
- der Werkzeugblock für jedes Werkzeug (4) eine individuelle Steuerkarte (704) mit Mikroprozessor(en) umfasst, die in dem Werkzeughalter (6), auf dem das Werkzeug montiert ist, untergebracht ist und in der eine Kennung des Werkzeugs gespeichert ist, wobei die individuelle Steuerkarte (704) mit dem zentralen Steuersystem (8) des Werkzeugblocks verbunden ist,
- die Positionsbestimmungsmittel ein in die individuelle Steuerkarte (704) jedes Werkzeughalters integriertes Berechnungsmodul und einen oder mehrere Sensoren umfassen, die sich an der Trägerschiene und/oder an jedem Werkzeughalter befinden.

5. Werkzeugblock nach einem der Ansprüche 3 oder 4, **dadurch gekennzeichnet, dass** die motorisierten Antriebsmittel für jeden Werkzeughalter (6) einen Motorblock (70) umfassen, der einen Motor (700) integriert, der so eingerichtet ist, dass er eine Motorwelle (701) in Drehung antreibt, an der das Ritzel (703) des Werkzeughalters befestigt ist.

6. Werkzeugblock nach einem der Ansprüche 3 bis 5, **dadurch gekennzeichnet, dass** die Positionsbestimmungsmittel für jeden Werkzeughalter (6) einen SINCOS-Sensor (708) umfassen, der so eingerichtet ist, dass er der individuellen Steuerkarte (704) des Werkzeugs oder dem zentralen Steuersystem (8) Messdaten überträgt, die repräsentativ für einen Winkel sind, den eine Referenzachse des Ritzels mit einer festen Referenzachse bildet, die orthogonal zu der Motorwelle (701) verläuft, wobei die individuelle Steuerkarte (704) des Werkzeugs oder das zentrale Steuersystem (8) so eingerichtet ist, dass sie bzw. es eine Anzahl von vollständigen Umdrehungen oder Bruchteilen von Umdrehungen berechnet, die von der Motorwelle von einer Zahnradposition (201) oder aus einer zuvor gespeicherten Position aus durchgeführt hat, und daraus eine aktuelle Position des Werkzeughalters (6) relativ zur Trägerschiene (2) ableitet.

7. Werkzeugblock nach einem der Ansprüche 1 bis 6, **dadurch gekennzeichnet, dass** die Mittel zur Kopplung an die Trägerschiene jedes Werkzeughalters einen Ausleger (68) umfassen, der eine Kopplungsöffnung (686) mit einem Querschnitt aufweist, der komplementär zu einem Nennquerschnitt der Trägerschiene ist, wobei die Kopplungsöffnung mit Rollen (688, 690) ausgestattet ist, um die Bewegung des Auslegers entlang der Trägerschiene zu ermöglichen.

8. Werkzeugblock nach Anspruch 7, **dadurch gekennzeichnet, dass** die Rollen eine einstellbare Rolle (690) umfassen, deren radiale Position in Bezug auf die Schiene einstellbar ist und die einer Zentripetalrückstellkraft unterliegt.

9. Werkzeugblock nach Anspruch 3, wobei die feste Kette (20) ein erstes Ende (201), das sogenannte Zahnradende, auf der Seite des Ladeendes (22) der Trägerschiene aufweist, **dadurch gekennzeichnet, dass** die Positionsbestimmungsmittel einerseits an jedem Werkzeughalter einen induktiven Näherungsschalter und andererseits am Zahnradende (201) der Kette ein empfindliches Element umfassen, das vom Näherungsschalter jedes Werkzeughalters erfasst werden kann.

10. Werkzeugblock nach einem der Ansprüche 1 bis 9, **dadurch gekennzeichnet, dass** jeder Werkzeughalter (6) einen Sensor oder Endschalter (696) an einer vorgelagerten Seitenfläche (694) des Werkzeughalters aufweist, die zu einem Parkende (24) der Trägerschiene ausgerichtet ist.

11. Landwirtschaftliche Maschine, ausgestattet mit einem Werkzeugblock nach einem der Ansprüche 1 bis 10.

## Claims

1. A tool block for an agricultural machine having an axial direction (X) intended to coincide with a direction of movement of the agricultural machine, and a transverse direction (Y) along which a width of the tool block is defined, this transverse direction of the tool block being intended to coincide with a transverse direction of the agricultural machine orthogonal to the axial direction of movement, the tool block comprising:
- a plurality of tools (4, 4a, 4b),
- for each tool, a tool holder (6, 6a, 6b) on which the tool is mounted,
- a support rail (2) extending along the transverse direction (Y), on which the tools can be mounted via their respective tool holder, said tool holder comprising means (68) for coupling to the support rail allowing a movement of the tool holder relative to the support rail along the transverse direction (Y),
which comprises:
- a central control system (8) containing microprocessor(s),
- a human-machine interface connected to the central control system and configured to enable a user to enter a usage configuration that defines tools to be used from the plurality of tools of the tool block, and also a target position on the support rail for each of the tools to be used,
- the tool block comprises motorized drive means (20, 70) configured to move each tool holder (6) individually along the transverse direction (Y) on the support rail, the motorized drive means being controlled, directly or indirectly, by the central control system (8),
- position-determining means (704, 708, 709) for determining the position of each tool holder relative to the support rail along the transverse direction.

2. The tool block according to claim 1, **characterized in that** the support rail comprises
- a loading end (22) and a loading section (26) whereby the tool holders (6) can be loaded on the support rail (2),
- a central working section on which the tool holders of the tools to be used can be driven and positioned according to the selected usage configuration, using the motorized drive means and the position-determining means,
- at least one lateral parking section, on which unused tools from the plurality of tools can be stored.

3. The tool block according to one of claims 1 or 2, **characterized in that** the motorized drive means comprise a fixed chain (20) which extends along the transverse direction (Y) and is integrated in the support rail (2), and also, for each tool holder, a pinion (703) adapted to be engaged on the fixed chain of the support rail for the purpose of moving the tool holder along the support rail.

4. The tool block according to claim 3, **characterized in that**:
- the tool block comprises, for each tool (4), an individual control card (704) with microprocessor(s), housed in the tool holder (6) on which the tool is mounted, and wherein an identifier of the tool is stored in memory, said individual control card (704) being connected to the central control system (8) of the tool block,
- the position-determining means comprise a computing module integrated in the individual control card (704) of each tool holder and one or more sensors located on the support rail and/or on each tool holder.

5. The tool block according to one of claims 3 or 4, **characterized in that** the motorized drive means comprise, for each tool holder (6), a motor unit (70) integrating a motor (700) configured to rotate a motor shaft (701) on which the pinion (703) of the tool holder is fastened.

6. The tool block according to one of claims 3 to 5, **characterized in that** the position-determining means comprise, for each tool holder (6), a SINCOS sensor (708) configured to transmit to the individual control card (704) of the tool or to the central control system (8) measurement data representative of an angle formed by a reference frame axis of the pinion with a fixed reference axis orthogonal to the motor shaft (701), the individual control card (704) of the tool or the central control system (8) being configured to compute a number of complete revolutions and fractions of revolutions performed by the motor shaft from a gearing position (201) or from a position previously stored in memory and to infer therefrom a current position of the tool holder (6) relative to the support rail (2).

7. The tool block according to one of claims 1 to 6, **characterized in that** the means for coupling to the support rail of each tool holder comprise a bracket (68) having a coupling opening (686) having a complementary cross-section of a nominal cross-section of the support rail, the coupling opening being equipped with rollers (688, 690) to enable the movement of the bracket along the support rail.

8. The tool block according to claim 7, **characterized in that** the rollers comprise an adjustable roller (690), the radial position of which relative to the rail is adjustable and which is subjected to a centripetal return force.

9. The tool block according to claim 3, the fixed chain (20) having a first end (201), referred to as gearing end, on the side of the loading end (22) of the support rail, **characterized in that** the position-determining means comprise, on one hand, an inductive proximity sensor on each tool holder and, on the other, at the gearing end (201) of the chain, a sensing element capable of being detected by the proximity sensor of each tool holder.

10. The tool block according to one of claims 1 to 9, **characterized in that** each tool holder (6) comprises a sensor or limit switch (696) on an upstream lateral face (694) of the tool holder oriented toward a parking end (24) of the support rail.

11. An agricultural machine equipped with a tool block according to one of claims 1 to 10.
